# EUROPÄISCHE PATENTSCHRIFT

(11) **EP 1 412 052 B1**
(45) Veröffentlichungstag und Bekanntmachung des Hinweises auf die Patenterteilung: **25.05.2005**
(21) Anmeldenummer: 02764794.0
(22) Anmeldetag: 26.07.2002
(51) Int. Cl.: B01D 47/02

(54) **LUFT-UND RAUMREINIGUNGSGERÄT**
AIR AND ROOM CLEANING DEVICE
APPAREIL DE NETTOYAGE DE L'AIR ET DE LOCAUX

(30) Priorität: 27.07.2001 DE 20112395 U
(43) Veröffentlichungstag der Anmeldung: 28.04.2004
(73) Patentinhaber: Braunmiller, Josef, 87785 Winterrieden (DE)
(72) Erfinder: Braunmiller, Josef, 87785 Winterrieden (DE)
(74) Vertreter: Thalmeir, Anton
(86) Internationale Anmeldenummer: PCT/EP2002/008366
(87) Internationale Veröffentlichungsnummer: WO 2003/011430

(56) Entgegenhaltungen:
- GB-A- 2 338 174
- US-A- 2 102 353
- PATENT ABSTRACTS OF JAPAN vol. 1997, no. 04, 30. April 1997 (1997-04-30) & JP 08 322770 A (AKAI ELECTRIC CO LTD), 10. Dezember 1996 (1996-12-10)

## Beschreibung

Die Erfindung bezieht sich auf ein Luft- und Raumreinigungsgerät mit einem Saugmotor und einer Wasser-Vorlage, sowie einem rotierenden, vom Wasser benetzten und von der Luft beströmten Separator.

Derartige Geräte sind in der Praxis bekannt (z.B. aus US 2102353), sie haben sich zwar sehr gut bewährt, haben aber einen entscheidenden Nachteil.

Beim Anlaufen des Saugmotors und bei dessen Abschalten wird, da der Separator noch nicht oder nicht mehr wirkt, ungereingte bzw. nicht optimal gereinigte Luft abgegeben.

Der Erfindung liegt die Aufgabe zugrunde, ein Gerät der eingangs genannten Art so zu verbessern, dass sowohl beim Einschalten als auch beim Abschalten des Gerätes ausschließlich gereinigte Luft abgegeben wird.

Diese Aufgabe wird erfindungsgemäß dadurch gelöst, daß eine Steuereinrichtung vorgesehen ist, welche insbesondere beim oder vor dem Abschalten des Separators den Saugmotor abbremst.

Insbesondere beim Auslaufen des Saugmotors hat dieser noch eine erhebliche Saugleistung, während der Separator nur bei sehr hohen Drehzahlen eine ausreichende Wirkung erzielt.

Wird nun der Separator abgeschaltet, so wird der Saugmotor ebenfalls in seiner Wirkung soweit inaktiviert, daß er keine ungereinigte Luft mehr abblasen kann.

Als sehr vorteilhaft hat es sich dabei ergeben, wenn gemäß einer Ausgestaltung der Erfindung der Saugmotor mit einer Bremse versehen ist, die vor oder wenigstens zeitgleich mit dem Abschalten des Separators wirksam ist.

Diese Bremse kann verschiedene Ausgestaltungen aufweisen.

Eine vorteilhafte Ausgestaltung der Erfindung ist dadurch gekennzeichnet, daß am Separator ein vom Saugmotor unabhängiger Motor angeordnet ist.

Damit kann der Saugmotor bereits vor dem Ausschalten des Separator-Antriebes abgebremst werden, so daß beim Nachlassen der Separatorwirkung keine Saugleistung mehr vorhanden ist.

Auch beim Einschalten kann zuerst der Separator hochgefahren werden, bevor der Saugmotor aktiviert wird.

Dabei hat es sich gemäß einer weiteren Ausgestaltung der Erfindung als sehr vorteilhaft ergeben, wenn die Steuereinrichtung den Saugmotor in Abhängigkeit von der Drehzahl des Separator-Motors ein bzw. ausschaltet.

Es ist jedoch auch möglich, daß die Steuereinrichtung den Saugmotor vor dem Separator-Motor ausschaltet und nach diesem einschaltet.

Diese zeitliche Folge reicht aus, um sicher ein Durchblasen von ungereinigter Luft zu verhindern.

Ebenfalls sehr vorteilhaft ist es, wenn erfindungsgemäß der Separator drehbar gelagert oberhalb der Wasservorlage angeordnet ist.

Eine vorteilhafte Ausgestaltung der Erfindung ist auch dadurch gekennzeichnet, daß der Separator an einer Luftdurchtrittsöffnung angeordnet ist, die in einen Saugraum führt, in welchem ein Lüfterrad des Saugmotors angeordnet ist.

Ebenfalls sehr vorteilhaft ist es, wenn erfindungsgemäß der Separator und das Lüfterrad der Saugeinrichtung einen gemeinsamen Antrieb aufweisen und mit einer Bremseinrichtung versehen sind.

Eine weitere vorteilhafte Ausgestaltung der Erfindung ist dadurch gegeben, daß der Separator und das Lüfterrad des Saugmotors auf einer gemeinsamen Welle angeordnet sind, an welcher eine Bremse angreift.

Sehr vorteilhaft ist auch eine weitere Ausgestaltung der Erfindung, gemäß welcher die Bremse als elektrische Bremse, wie z.B. als Wirbelstrombremse, ausgebildet ist.

Es ist gemäß der Erfindung aber auch möglich, daß die Bremse als mechanische Bremse ausgebildet ist.

Es hat sich gemäß einer Weiterbildung der Erfindung auch als sehr vorteilhaft erwiesen, wenn im Bereich der Wasservorlage wenigstens eine Leiteinrichtung vorgesehen ist.

Diese Leiteinrichtung vermag den Weg der in das Reinigungsgerät einströmende, verunreinigten Luft zu lenken und zu leiten.

Dabei hat es sich als sehr vorteilhaft erwiesen, wenn als Leiteinrichtung wenigstens ein Prallblech vorgesehen ist.

Ebenfalls sehr vorteilhaft ist es, wenn die Leiteinrichtung im wesentlichen parallel zur Bodenfläche vorgesehen ist.

Eine weitere sehr vorteilhafte Ausgestaltung der Erfindung liegt darin, daß die Leiteinrichtung derart angeordnet ist, daß die Wasservorlage wenigstens in zwei Kammern unterteilt ist.

Desweiteren hat es sich als sehr vorteilhaft erwiesen, wenn die Leiteinrichtung herausnehmbar ausgebildet ist.

Alle diese Leiteinrichtungen bezwecken eine längere Verweildauer der Luft in der Wasservorlage, wodurch diese nochmals verbessert gereinigt wird.

In der Zeichnung ist die Erfindung anhand von drei Ausführungsbeispielen veranschaulicht. Dabei zeigen:
- Fig.1: eine schematische Darstellung eines Gerätes zum Luft- und Raumreinigen mit zwei getrennten Motoren,
- Fig.2: eine ebenfalls schematische Darstellung eines Gerätes mit einem gemeinsamen Antriebsmotor für die Saugeinrichtung und den Separator und

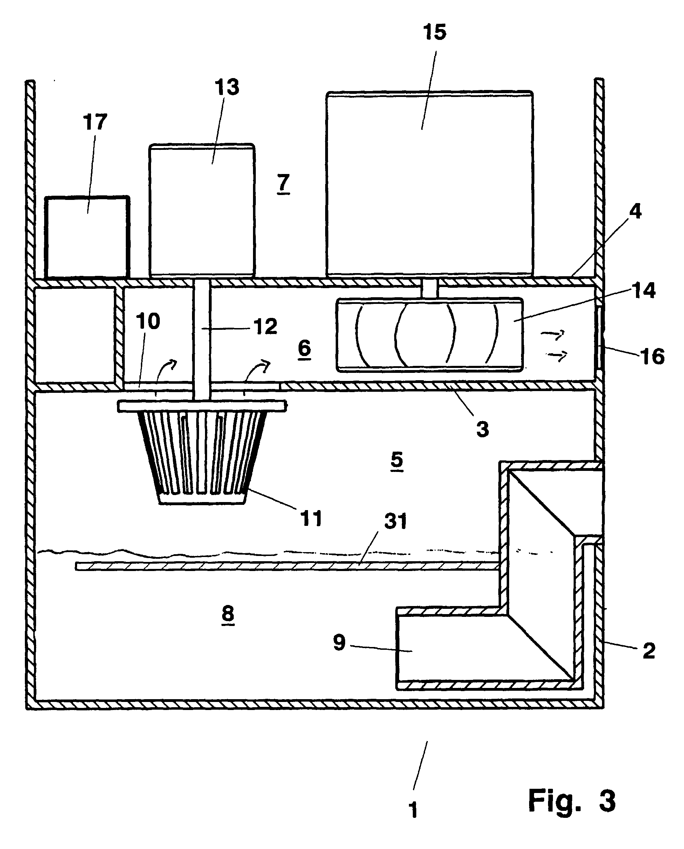

- Fig.3: eine weitere schematische Darstellung eines Gerätes zum Luft- und Raumreinigen mit einer als Prallplatte ausgebildeten Leiteinrichtung.

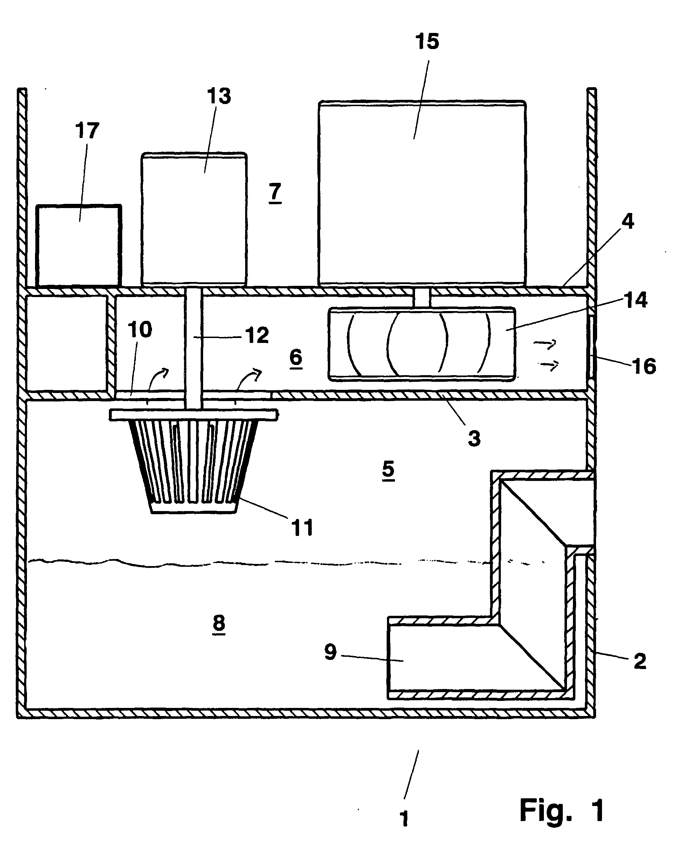

Mit 1 ist in Fig.1 ein Gerät bezeichnet, das ein Gehäuse 2 aufweist. In diesem Gehäuse 2 sind zwei horizontal verlaufende Zwischenwände 3 und 4 vorgesehen, welche das Gehäuse in drei Raumabteile 5, 6 und 7 aufteilt. Im untersten Raumabteil 5 ist eine Wasservorlage 8 vorgesehen, in welche ein Lufteinlass-Stutzen 9 einmündet. Dieser Lufteinlass-Stutzen ist oberhalb der Wasservorlage 8 in die Außenwand des Gehäuses 2 eingelassen, so daß ein Austritt des Wassers durch diesen Stutzen vermieden wird. In der Zwischenwand 3 ist eine Luftdurchtrittsöffnung 10 vorgesehen, vor der ein Separator 11 angeordnet ist, der über eine Antriebswelle 12 mit einem Antriebsmotor 13 verbunden ist. Die Luftdurchtrittsöffnung 10 mündet in das zweite Raumabteil 6, das von den Zwischenwänden 3 und 4 begrenzt wird. In diesem Raumabteil 6 ist ein Lüfterrad 14 eines Saugmotors 15 angeordnet, welches die Luft durch den Lufteinlass-Stutzen 9 ansaugt und durch eine Auslass-Öffnung 16 in der Außenwand des Gehäuses 2 abbläst.

Der Luftstrom reißt beim Durchdringen der Wasservorlage Wassertropfen mit, an denen sich die in der Luft enthaltenen Staubpartikel anlagern. Beim Auftreffen auf den sich mit hoher Geschwindigkeit (etwa 25.000 min-1) drehenden Separator 11 werden die Wassertropfen mit dem gebundenen Staub abgeschleudert; evtl. nicht abgeschleudertes Wasser läuft nach unten ab, wobei der Staub wenigstens teilweise am Separator anhaftet.

Die den Separator 11 durchdringende Luft ist gereinigt und wird vom Lüfterrad 14 zum Luftauslass 16 befördert.

Beim Einschalten des Gerätes 1 wird über eine nicht näher erläuterte Steuereinrichtung 17 zuerst der Separator 11,12,13 hochgefahren; erst wenn dessen wirksame Drehzahl erreicht ist, wird auch der Saugmotor 15 eingeschaltet. Damit ist der Austritt von ungereinigter Luft aus dem Luftauslass 16 ausgeschlossen. Auch beim Ausschalten bleibt der Separator solange eingeschaltet, wie das Lüfterrad 14 des Saugmotors 15 noch Luft aus dem Auslass hinaus befördert. Erst danach wird der Separator-Motor 13 durch die Steuereinrichtung 17 abgeschaltet.

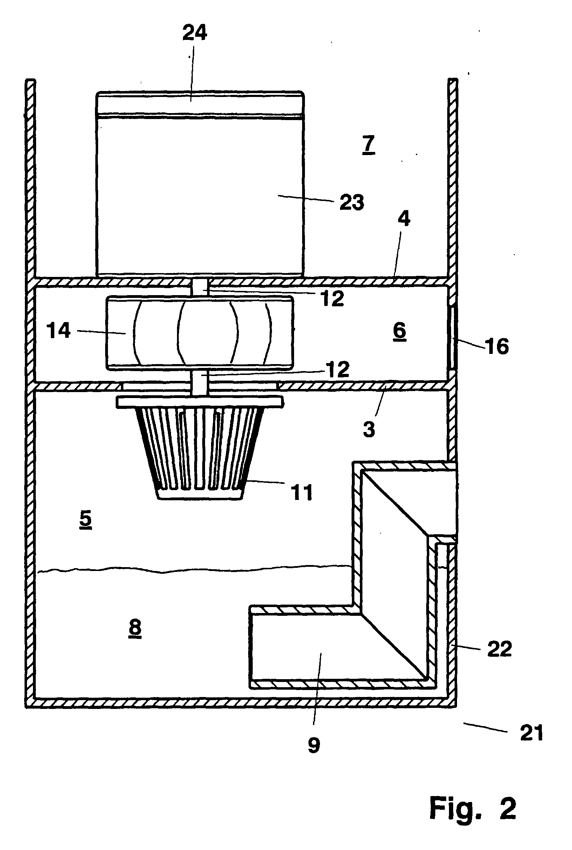

Beim Ausführungsbeispiel nach Fig.2 ist ein Luft- und Raumreinigungsgerät 21 wieder mit einem Gehäuse 22 versehen. Die beiden Zwischenwände 3 und 4 teilen auch hierbei drei Raumabteile 5, 6 und 7 voneinander ab. Im untersten Raumabteil 5 ist wieder eine Wasservorlage 8 vorgesehen, in welche der Lufteintrittsstutzen 9 mündet. Der oberhalb der Wasservorlage 8 im untersten Raumabteil 5 angeordnete Separator 11 ist zusammen mit dem im zweiten Raumabteil 6 angeordneten Lüfterrad 14 auf einer gemeinsamen Welle 12 befestigt, die von einem gemeinsamen Antriebsmotor 23 angetrieben wird.

Dieser Antriebsmotor 23 ist so ausgelegt, daß er seine Höchstdrehzahl, bei der der Separator 11 voll wirksam ist, sehr schnell erreicht, so daß beim Anlaufen des Gerätes 21 keine nenneswerte Menge an ungereinigter Luft austritt.

Der Antriebsmotor 23 ist mit einer Bremse 24 ausgestattet, die beim Abschalten des Gerätes einen sehr schnellen Stillstand herbeiführt, so daß auch hierbei keine nenneswerte Luftmenge mehr gefördert wird.

Für die Bremse 24 sind verschiedene Ausgestaltungen möglich. Zum einen ist eine elektrische Bremse denkbar, wie sie beispielsweise eine Wirbelstrombremse darstellt. Auch können elektronische Bremsschaltungen eingesetzt werden. Es ist aber auch möglich, eine mechanische Bremse vorzusehen.

Der Separator 11 und das Lüfterrad 14 können auch anderweitig, beispielsweise über einen Riemenantrieb, miteinander verbunden sein und dann über einen einzigen Motor angetrieben werden. Hierbei sind dann die gleichen Maßnahmen, wie sie im Zusammenhang mit der gemeinsamen Antriebswelle beschrieben wurden, notwendig.

Im Bereich der Wasservorlage 8 kann eine horizontal angebrachte Prallplatte 31 vorgesehen sein, welche die Verweildauer der durch die Luftdurchtrittsöffnung 10 angesaugten Luft in der Wasservorlage erhöht. Denkbar ist es aber auch, daß durch entsprechend ausgeformte Leiteinrichtungen der Weg der Luft durch die Wasservorlage 8 nochmals verlängert wird. Beispielsweise kann ein Kanal durch die Wasservorlage 8 gebildet werden. Die Prallplatte 31 ist herausnehmbar ausgebildet. Eine leichte Reinigbarkeit ist somit sichergestellt.

Es ist aber auch denkbar, daß das Raumabteil 5, welches die Wasservorlage 8 enthält, oberhalb der Wasservorlage 8 durch eine Leiteinrichtung in wenigstens zwei Unterabteile unterteilt wird, und daß der Lufteinlass-Stutzen 9 nur als Durchbrechung durch die Aussenwand des Gehäuses 2 ausgebildet ist. Im Inneren mündet der Lufteinlass-Stutzen in einem der beiden Unterabteile. Damit nun Luft von diesem Unterabteil zum anderen Unterabteil gelangen kann, muss diese durch die Wasservorlage 8 strömen.

## Patentansprüche

1. Luft- und Raumreinigungsgerät(1,21) mit einem Saugmotor und einer Wasser-Vorlage(8), sowie einem rotierenden, vom Wasser benetzten und von der Luft beströmten Separator, **dadurch gekennzeichnet, daß** eine Steuereinrichtung(17) vorgesehen ist, welche insbesondere beim Abschalten des Separators(11) den Saugmotor(15,23) abbremst.

2. Luft- und Raumreinigungsgerät nach Anspruch 1, **dadurch gekennzeichnet, daß** der Saugmotor(23) mit einer Bremse(24) versehen ist, die vor oder wenigstens zeitgleich mit dem Abschalten des Separators(11) wirksam ist.

3. Luft- und Raumreinigungsgerät nach Anspruch 1, **dadurch gekennzeichnet, daß** am Separator(11) ein vom Saugmotor(15) unabhängiger Motor(13) angeordnet ist.

4. Luft- und Raumreinigungsgerät nach Anspruch 3, **dadurch gekennzeichnet, daß** die Steuereinrichtung(17) den Saugmotor(15) in Abhängigkeit von der Drehzahl des Separator-Motors(13) ein bzw. ausschaltet.

5. Luft- und Raumreinigungsgerät nach Anspruch 3, **dadurch gekennzeichnet, daß** die Steuereinrichtung(17) den Saugmotor(15) vor dem Separator-Motor ausschaltet und nach diesem einschaltet.

6. Luft- und Raumreinigungsgerät nach einem der vorhergehenden Ansprüche, **dadurch gekennzeichnet, daß** der Separator(11) drehbar gelagert oberhalb der Wasservorlage(8) angeordnet ist.

7. Luft- und Raumreinigungsgerät nach Anspruch 6, **dadurch gekennzeichnet, daß** der Separator(11) an einer Luftdurchtrittsöffnung(10) angeordnet ist, die in einen Saugraum(6) führt, in welchem ein Lüfterrad(14) des Saugmotors(15) angeordnet ist.

8. Luft- und Raumreinigungsgerät nach einem der vorhergehenden Ansprüche, **dadurch gekennzeichnet, daß** der Separator(11) und das Lüfterrad(14) der Saugeinrichtung einen gemeinsamen Antrieb aufweisen.

9. Luft- und Raumreinigungsgerät nach Anspruch 8, **dadurch gekennzeichnet, daß** der Separator(11) und das Lüfterrad(14) des Saugmotors auf einer gemeinsamen Welle(12) angeordnet sind, an welcher eine Bremse(24) angreift.

10. Luft- und Raumreinigungsgerät nach Anspruch 9, **dadurch gekennzeichnet, daß** die Bremse(24) als elektrische Bremse, beispielsweise als Wirbelstrombremse ausgebildet ist.

11. Luft- und Raumreinigungsgerät nach Anspruch 9, **dadurch gekennzeichnet, daß** die Bremse(24) als mechanische Bremse ausgebildet ist.

12. Luft- und Raumreinigungsgerät nach einem der vorangehenden Ansprüche, **dadurch gekennzeichnet, daß** im Bereich der Wasservorlage(8) wenigstens eine Leiteinrichtung vorgesehen ist.

13. Luft- und Raumreinigungsgerät nach Anspruch 12, **dadurch gekennzeichnet, daß** als Leiteinrichtung wenigstens ein Prallblech(31) vorgesehen ist.

14. Luft- und Raumreinigungsgerät nach Anspruch 12 oder 13, **dadurch gekennzeichnet, daß** die Leiteinrichtung im wesentlichen parallel zur Bodenfläche vorgesehen ist.

15. Luft- und Raumreinigungsgerät nach Anspruch 12, 13 oder 14, **dadurch gekennzeichnet, daß** die Leiteinrichtung derart angeordnet ist, daß die Wasservorlage(8) wenigstens in zwei Kammern unterteilt ist.

16. Luft- und Raumreinigungsgerät nach einem der Ansprüche 12 bis 15, **dadurch gekennzeichnet, daß** die Leiteinrichtung herausnehmbar ausgebildet ist.

## Claims

1. Air and room cleaning device (1, 21) with a suction motor and a supply of water (8) as well as with a rotating separator which is wetted by the water and through which the air flows, **characterized in that** a control unit (17) is provided which brakes the suction motor (15, 23) particularly when the separator (11) is switched off.

2. Air and room cleaning device according to claim 1, **characterized in that** the suction motor (23) is provided with a brake (24) that takes effect before or at least at the same time that the separator (11) is switched off.

3. Air and room cleaning device according to claim 1, **characterized in that** a motor (13) independent of the suction motor (15) is provided on the separator (11).

4. Air and room cleaning device according to claim 3, **characterized in that** the control unit (17) switches the suction motor (15) on and off depending on the speed of the separator motor (13).

5. Air and room cleaning device according to claim 3, **characterized in that** the control unit (17) switches the suction motor (15) off before the separator motor and switches the suction motor (15) on after the separator motor.

6. Air and room cleaning device according to one of the previous claims, **characterized in that** the separator (11) is pivoted above the supply of water (8).

7. Air and room cleaning device according to claim 6, **characterized in that** the separator (11) is located at an air passage opening (10) that leads into a suction room (6) in which a ventilation wheel (14) of the suction motor (15) is located.

8. Air and room cleaning device according to one of the previous claims, **characterized in that** the separator (11) and the ventilation wheel (14) of the suction unit have a joint drive.

9. Air and room cleaning device according to claim 8, **characterized in that** the separator (11) and the ventilation wheel (14) of the suction motor are located on a joint shaft (12) that is engaged by a brake (24).

10. Air and room cleaning device according to claim 9, **characterized in that** the brake (24) is configured as an electric brake, such as an eddy current brake.

11. Air and room cleaning device according to claim 9, **characterized in that** the brake (24) is configured as a mechanical brake.

12. Air and room cleaning device according to one of the previous claims, **characterized in that** at least one guide unit is provided in the area of the supply of water (8).

13. Air and room cleaning device according to claim 12, **characterized in that** at least one deflection plate (31) is provided as the guide unit.

14. Air and room cleaning device according to claim 12 or 13, **characterized in that** the guide unit is provided essentially parallel to the base surface.

15. Air and room cleaning device according to claim 12, 13 or 14, **characterized in that** the guide unit is located in such a way that the supply of water (8) is divided up into at least two chambers.

16. Air and room cleaning device according to one of claims 12 to 15, **characterized in that** the guide unit is designed to be removable.

## Revendications

1. Appareil de nettoyage d'air et de locaux (1,21) pourvu d'un moteur à aspiration et d'un récepteur d'eau (8), ainsi que d'un séparateur rotatif humidifié par l'eau et traversé par l'air, **caractérisé en ce qu'**un dispositif de commande (17) est prévu, lequel ralentit le moteur à aspiration (15, 23) en particulier lors de l'arrêt du séparateur (11).

2. Appareil de nettoyage d'air et de locaux selon la revendication 1, **caractérisé en ce que** le moteur à aspiration (23) est pourvu d'un frein (24) qui agit avant ou au moins en même temps que l'arrêt du séparateur (11).

3. Appareil de nettoyage d'air et de locaux selon la revendication 1, **caractérisé en ce qu'**un moteur (13) indépendant du moteur à aspiration (15) est disposé sur le séparateur (11).

4. Appareil de nettoyage d'air et de locaux selon la revendication 3, **caractérisé en ce que** le dispositif de commande (17) démarre ou arrête le moteur à aspiration (15) en fonction de la vitesse de rotation du moteur (13) du séparateur.

5. Appareil de nettoyage d'air et de locaux selon la revendication 3, **caractérisé en ce que** le dispositif de commande (17) arrête le moteur à aspiration (15) avant le moteur du séparateur et le met en marche après ce dernier.

6. Appareil de nettoyage d'air et de locaux selon l'une quelconque des revendications précédentes, **caractérisé en ce que** le séparateur (11) est logé de manière rotative au-dessus du récepteur d'eau (8).

7. Appareil de nettoyage d'air et de locaux selon la revendication 6, **caractérisé en ce que** le séparateur (11) est disposé sur un orifice de pénétration d'air (10), qui mène à une chambre d'aspiration (6), dans laquelle est disposée une roue de ventilateur (14) du moteur à aspiration (15).

8. Appareil de nettoyage d'air et de locaux selon l'une quelconque des revendications précédentes, **caractérisé en ce que** le séparateur (11) et la roue de ventilateur (14) du dispositif d'aspiration comportent un entraînement commun.

9. Appareil de nettoyage d'air et de locaux selon la revendication 8, **caractérisé en ce que** le séparateur (11) et la roue de ventilateur (14) du moteur à aspiration sont disposés sur un arbre commun (12) sur lequel agit un frein (24).

10. Appareil de nettoyage d'air et de locaux selon la revendication 9, **caractérisé en ce que** le frein (24) est conçu comme un frein électrique, par exemple comme un frein à courant de Foucault.

11. Appareil de nettoyage d'air et de locaux selon la revendication 9, **caractérisé en ce que** le frein (24) est conçu comme un frein mécanique.

12. Appareil de nettoyage d'air et de locaux selon l'une quelconque des revendications précédentes, **caractérisé en ce qu'**au moins un dispositif de guidage est prévu dans la zone du récepteur d'eau (8).

13. Appareil de nettoyage d'air et de locaux selon la revendication 12, **caractérisé en ce qu'**au moins un déflecteur (31) est prévu comme dispositif de guidage.

14. Appareil de nettoyage d'air et de locaux selon la revendication 12 ou 13, **caractérisé en ce que** le dispositif de guidage est prévu essentiellement parallèlement à la surface du sol.

15. Appareil de nettoyage d'air et de locaux selon la revendication 12, 13 ou 14, **caractérisé en ce que** le dispositif de guidage est disposé de manière à ce que le récepteur d'eau (8) soit divisé au moins en deux chambres.

16. Appareil de nettoyage d'air et de locaux selon l'une quelconque des revendications 12 à 15, **caractérisé en ce que** le dispositif de guidage est conçu de manière à être démontable.
